# EUROPEAN PATENT APPLICATION

(11) **EP 1 655 200 A2**
(43) Date of publication of application: **10.05.2006**
(21) Application number: 05023528.2
(22) Date of filing: 27.10.2005
(51) Int. Cl.: B62D 1/12, G05G 9/047

(54) **Operator control device**

(30) Priority: 03.11.2004 US 980089
(71) Applicant: Eaton Corporation, Cleveland, Ohio 44114-2584 (US)
(72) Inventor: Zumbusch, Steven John, Chanhassen Minnesota 55317-8626 (US)
(74) Representative: Schwan - Schwan - Schorer

(57) **Abstract**

A control assembly adapted for use on a vehicle to be controlled in response to variations in first and second control signals, comprising a stationary mounting member and a handle (33;57;69) adapted to be held in the hand of an operator. The handle is moveable in forward and reverse directions to generate the first signal and is moveable in left and right directions to generate the second signal. The control assembly comprises an elongated connector member (23,25;47,53;65) which by itself, or in cooperation with one of the stationary mounting member (11,41;61) and the handle, defines a first pivot axis (A1). When the handle is held in a normal manner in the hand of an operator, the first pivot axis (A1) is oriented generally perpendicular to the arm of the operator, and approximately intersects one of the hand and the arm of the operator.

## Description

### BACKGROUND OF THE DISCLOSURE

The present invention relates to control assemblies for use in vehicles which are to be controlled and perhaps steered, in response to variations in some sort of control signals, whether electrical or hydraulic, etc., and more particularly, to such control assemblies of the type including some sort of handle adapted for manual manipulation by the vehicle operator.

By way of example only, control assemblies of the type to which the present invention relates may be utilized on vehicles such as skid steer loaders, wherein each side of the machine is driven by a separate hydrostatic transmission (HST). The two transmissions may be controlled simultaneously by the vehicle operator by means of a control assembly of the type which is typically referred to as a "joystick". In this type of control assembly, and as is well known to those skilled in the art, movement of the joystick in a forward direction causes both of the pumps of the HSTs to be displaced in a forward direction, such that both HSTs drive their respective propel wheels in a forward direction. Conversely, moving the joystick in a rearward direction causes both of the pumps of the HSTs to be displaced in a reverse direction, such that both HSTs drive their respective propel wheels in the reverse direction.

In order to steer the vehicle, for example, to turn the vehicle to the right while moving forward, the operator moves the joystick forward and somewhat to the right. The result of such movement of the joystick is that the pump of the HST associated with the left propel wheel is displaced for forward drive, with the amount of pump displacement, and therefore, HST output speed, corresponding to the extent of the forward movement of the joystick. At the same time, the pump of the HST associated with the right propel wheel is displaced such that the right propel wheel is driven more slowly than the left propel wheel, the ratio of the speed of the left propel wheel to that of the right propel wheel being generally proportional to the extent to which the joystick is displaced toward the right.

The conventional, prior art, "two-axis" joystick has been of the type illustrated and described in U.S. Patent No. 4,321,980, incorporated herein by reference. In the conventional joystick, there is a joystick handle provided, which is to be manipulated by the vehicle operator. Typically, an elongated rod-like connector extends out of the bottom of the handle and into a mounting base, with the pivot point of the handle-and-connector combination being disposed somewhere within the mounting base, i.e., at some distance, vertically, below the hand and arm of the vehicle operator.

Although the above-described conventional two-axis joystick has been generally satisfactory in regard to its performance under normal operating conditions, there are certain inherent disadvantages to the prior art joystick arrangement described above. Whenever the vehicle is being driven over rough terrain, or whenever the vehicle is being accelerated or decelerated rapidly, it is very common for the vehicle operator to be subjected to a substantial amount of force, tending to "bounce" the operator around within the vehicle cab, and because the operator is holding the joystick, the result can be unintended input motions, from the vehicle to the operator, and then from the hand of the vehicle operator, to the joystick. As will be understood by those who have had experience operating such vehicles, any such unintended input motions to the joystick may cause the operation of the vehicle, or other auxiliary components (such as the boom and bucket) being controlled to become erratic and hard to control, which may, in turn, worsen the bouncing motion imparted to the operator.

### BRIEF SUMMARY OF THE INVENTION

Accordingly, it is an object of the present invention to provide an improved control assembly of the general type referred to as a "joystick", wherein the control assembly overcomes the problems associated with the above-described prior art, i.e., in which the control assembly is configured, relative to the various pivot axes, to reduce unintended input motions to the control assembly.

It is a more specific object of the present invention to provide an improved control assembly which accomplishes the above-stated object, and in which the movements of the control handle ("joystick") more nearly correspond to the natural movements of the hand and wrist of the vehicle operator.

It is a more specific object of the present invention to provide such an improved control assembly which achieves the above-stated objects, wherein the control assembly is capable of movement about axes which generally coincide with, or intersect, the axes of movement of the hand and wrist of the vehicle operator.

The above and other objects of the invention are accomplished by the provision of a control assembly adapted for use on a vehicle to be controlled in response to variations in first and second control signals. The control assembly comprises a stationary mounting member and a handle adapted to be held in the hand of a vehicle operator. The handle is moveable in forward and reverse directions to generate the first control signal, and is moveable in left and right directions to generate the second control signal.

The improved control assembly is characterized by the assembly further comprising an elongated connector member which by itself, or in cooperation with one of the stationary mounting member and the handle, defines a first pivot axis whereby, when the handle is held in a normal manner in the hand of a vehicle operator, the first pivot axis is oriented generally perpendicular to the arm of the vehicle operator, and approximately intersects one of the hand and the arm of the vehicle operator.

In accordance with a more limited aspect of the invention, a control assembly is provided which is adapted for use on a vehicle to be controlled and steered in response to variations in first and second control signals. The control assembly comprises a stationary control mounting member and a handle adapted to be held in the hand of the vehicle operator, the handle being moveable in forward and reverse directions to generate the first control signal, and being moveable in left and right directions to generate the second control signal.

The improved control assembly, in accordance with this more limited aspect, is characterized by the handle defining an upper end, a lower end, and a pivot location disposed within the handle and being generally intermediate the upper and lower ends of the handle. An elongated connector member has a first portion fixed to pivot about a pivot axis and a second portion connected to the handle at the pivot location. A first sensor is operably associated with the first portion of the connector member and the first pivot axis, and the connection of the second portion of the connector member and the pivot location of the handle is such that movement of the handle in the forward and reverse directions results in the handle and the connector member moving as a unit, the first portion of the connector member pivoting about the first pivot axis, and the first sensor generating the first control signal. A second sensor is operably associated with the second portion of the connector member and the pivot location, and the connection of the second portion of the connector member and the pivot location of the handle is such that movement of the handle in left and right directions results in the handle pivoting about the second portion of the connector member and the second sensor generating the second control signal.

In accordance with a more specific aspect of the invention, the improved control assembly is characterized by the connector member being configured whereby, when the handle is held in a normal manner in the hand of a vehicle operator, the first pivot axis is orientated generally perpendicular to the arm of the vehicle operator, and the connector member is configured whereby the first pivot axis intersects the arm of the vehicle operator at approximately the wrist joint.

### BRIEF DESCRIPTION OF THE DRAWINGS

FIG. 1 is a perspective view, looking generally from the operator seat toward the left side of the vehicle, of a control assembly made in accordance with one embodiment of the present invention and adapted to be manipulated by the left hand of a vehicle operator.

FIG. 2 is a perspective view of the embodiment shown in FIG. 1, but taken in a direction from in front of the operator's seat, and looking somewhat rearward in the vehicle, to provide a better view of some portions of the control assembly not seen as well in FIG. 1.

FIG. 3 is a perspective view, taken in a direction similar to that of FIG. 1, but looking somewhat more in a forward direction, and illustrating an alternative embodiment of the present invention.

FIG. 4 is a rear plan view of the alternative embodiment of FIG. 3, and on a slightly larger scale than FIG. 3.

FIG. 5 is a perspective view, taken in a direction similar to that of FIG. 3, and illustrating yet another embodiment of the present invention.

FIG. 6 is an enlarged plan view, looking from the right in FIG. 5, toward the left side of the vehicle.

FIG. 7 is a top plan view of the alternative embodiment shown in FIGS. 5 and 6, and on a slightly smaller scale than FIG. 6.

FIG. 8 is a perspective view, taken in a direction similar to that of FIG. 5, and illustrating, somewhat schematically, still another alternative embodiment of the present invention.

FIG. 9 is a plan view, looking from the right in FIG. 8, toward the left side of the vehicle, with the handle portion shown is dashed lines to illustrate movement thereof.

### DETAILED DESCRIPTION OF THE PREFERRED EMBODIMENT

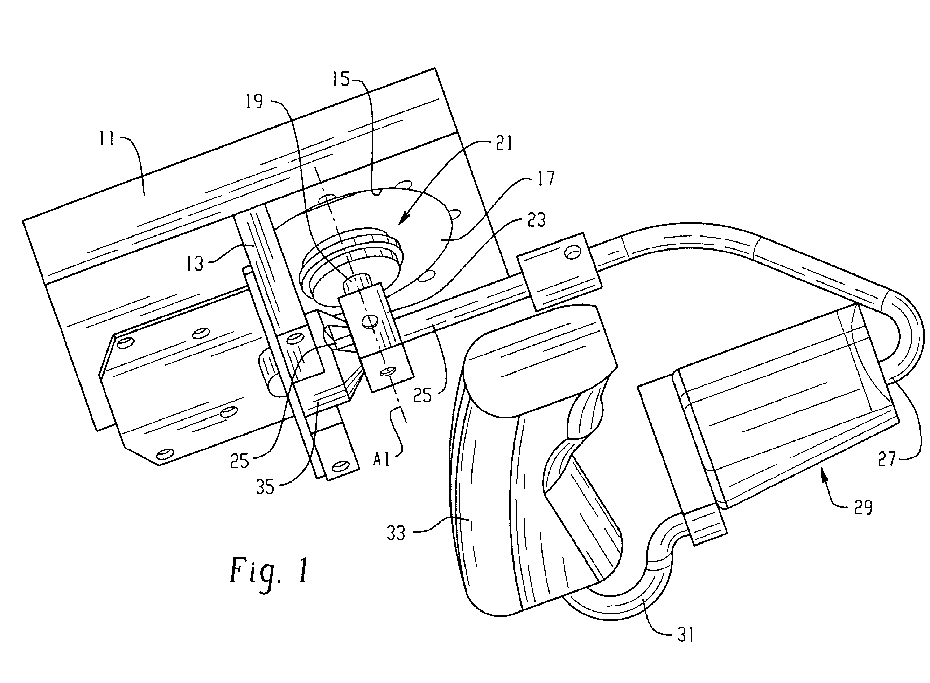

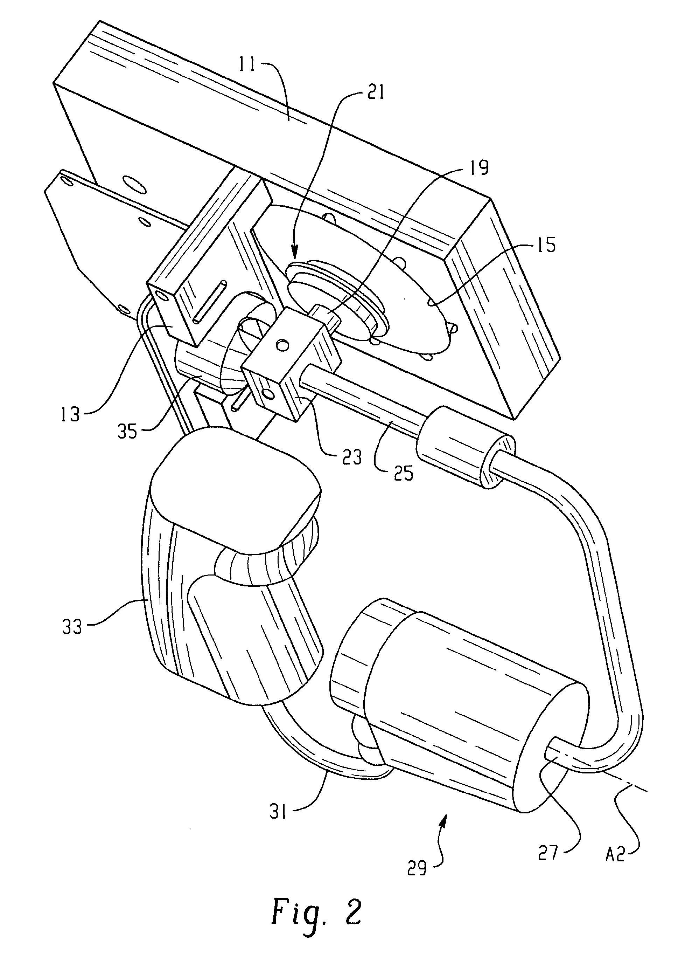

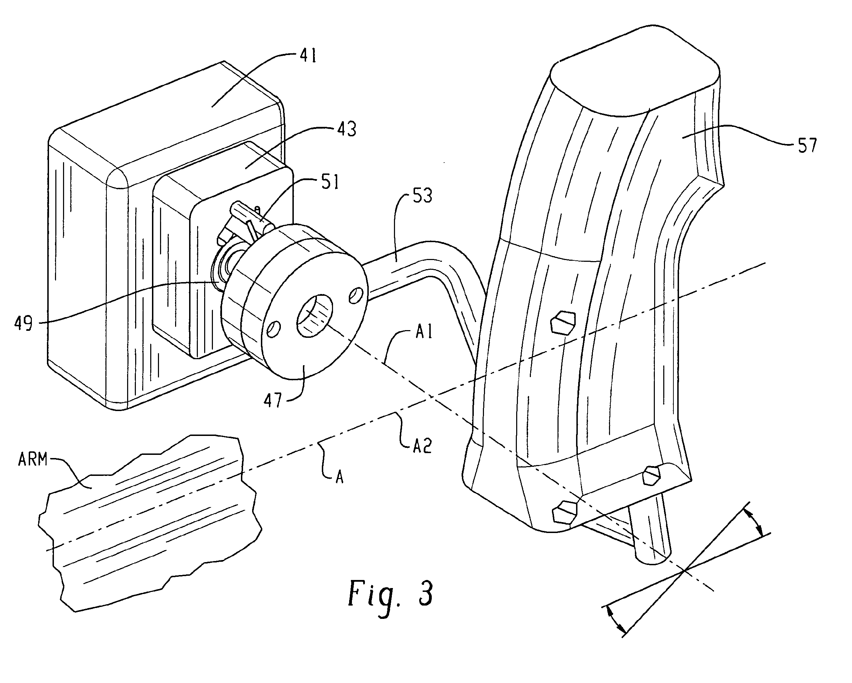

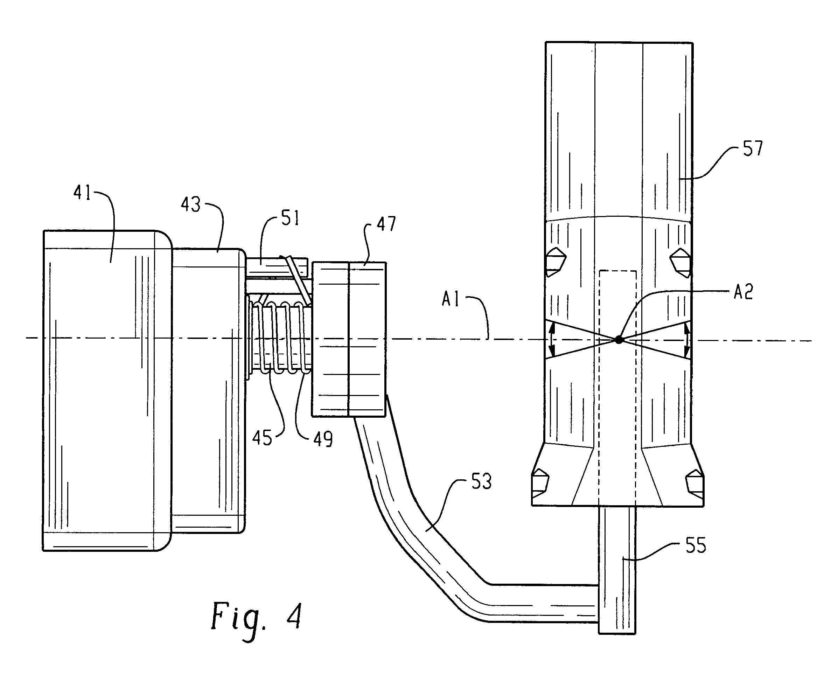

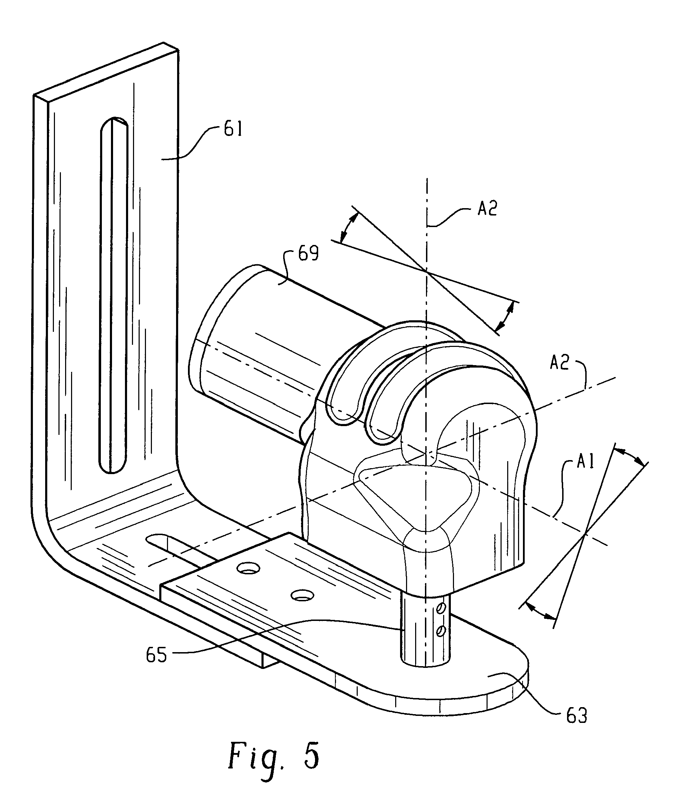

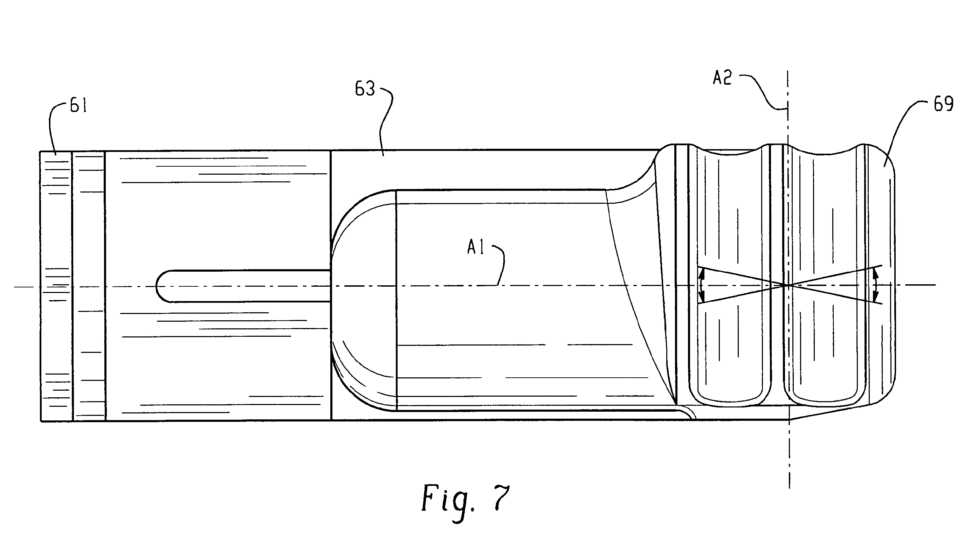

Referring now to the drawings, which are not intended to limit the invention, FIG. 1 is a perspective view of a control assembly made in accordance with one embodiment of the present invention, the control assembly being viewed from a location approximately in the vehicle operator's seat and looking generally toward the left side of the vehicle. The subject embodiment of the present invention is a control assembly adapted to be manually manipulated by the vehicle operator, and specifically, by the left hand of the vehicle operator. Those skilled in the art will understand that the control assembly shown in FIGS. 1 and 2 could be easily "reversed", and located on the right side of the vehicle operator for manipulation by the operator, using his right hand, which arrangement would still be within the scope of the invention. Those skilled in the art will also understand that the same statement holds true for the alternative embodiment of FIGS. 3 and 4, as well as for the alternative embodiment of FIGS. 5, 6 and 7.

Referring still to FIG. 1, the control assembly of the first embodiment includes a mounting bracket 11 which would be attached in any suitable manner so as to be fixed relative to the vehicle, i.e. relative to the vehicle chassis or body. As may best be seen in FIG. 1, in conjunction with FIG.2, the mounting bracket 11 is shown as a generally rectangular member, the lengthwise dimension of which is oriented preferably parallel to the longitundinal axis of the vehicle, merely to illustrate the orientation within the vehicle of the control assembly of the present invention. Extending transversely of the vehicle (perpendicular to the mounting bracket 11) is a support member 13, the function of which will be described subsequently.

Referring still primarily to FIGS. 1 and 2, the mounting bracket 11 defines a cylindrical opening 15, and disposed therein is a bearing assembly 17, the lead line associated with the reference numeral "17" pointing to the outer race or cover of the bearing assembly. Rotatably supported by the bearing assembly 17, and extending out of the mounting bracket 11, is a forward-reverse ("F-R") shaft 19, the axis of which defines an axis of rotation A1 which will also be referred to hereinafter as the "first pivot axis", or as the "F-R axis". Disposed within the mounting bracket 11, and attached to the F-R shaft 19 is a forward-reverse sensor assembly, generally designated 21, the function of which is to sense any rotation of the F-R shaft 19, from its "centered" or neutral position as shown in FIGS. 1 and 2, and generate a first electrical control signal representative of the rotation of the F-R shaft 19. The electrical control signal generated by the sensor assembly 21 would typically be transmitted by means of a pair of electrical leads or connections (not shown herein). In accordance with an important aspect of the present invention, it is about the A1 axis that the control assembly pivots, whenever the vehicle operator wishes to achieve a change in either forward or rearward movement of the vehicle, as will be described in greater detail subsequently. Although movement of the control assembly would normally generate an electrical control signal, those skilled in the art will understand that the present invention is not so limited, and the signal resulting from the movement of the control assembly could also be a hydraulic signal, or even a "mechanical" signal.

The end of the F-R shaft 19, extending out of the sensor 21, extends into a block-like joint member 23, and also received within the joint member 23 is the rearward end of a tubular connector member 25. The opposite end of the connector member 25 (i.e., a forward end portion 27) extends into a forward end of a sensor assembly, generally designated 29. The forward end portion 27 would preferably extend axially through at least a major portion of the sensor assembly 29, defining therein a longitudinal axis of rotation A2, which will also be referred to hereinafter as the "second pivot axis", or as the "L-R axis". Preferably, but not essentially, the F-R axis would be oriented perpendicular to the axis of the vehicle, while the L-R axis would be oriented generally parallel to the axis of the vehicle, and therefore, parallel to the normal direction of movement of the vehicle.

Operably associated with the sensor assembly 29, but offset from the axis of rotation A2, is a connector member 31 which loops somewhat downward from the sensor assembly 29, and then extends upwardly into a fixed relationship within a handle member 33. As may be seen in either FIG. 1 or FIG. 2, the handle member 33 is configured such that the vehicle operator's arm would extend forwardly, from the left in FIG. 1, with the palm of the operator's hand engaging the outside of the handle member 33, i.e., the side disposed toward the mounting bracket 11, and the fingers of the operator's hand curling about the forward portion (right portion in FIG. 1) of the handle member 33. It should be understood by those skilled in the art that the specific configuration of the various members described up to this point, such as the connector members 25 and 31, and the handle member 33, are not essential features of the invention, in an of themselves, but instead, what is important is the relationship of the axes A1 and A2 relative to the operator's wrist and hand, as will be described in greater detail subsequently, and in connection with other embodiments.

Extending rearwardly out of the joint member 23 is a rearward most portion of the connector member 25 (seen only in FIG. 1), which portion extends into a centering spring assembly 35, the function of which is continually to bias the connector member 25 (as well as the sensor assembly 29, connector member 31 and handle member 33) toward the normal, neutral position shown in FIGS. 1 and 2. Those skilled in the art will understand that the centering spring assembly 35 could take many forms, such as a pair of compression springs, above and below the rearward most portion of the connector member 25, the details of which form no part of the present invention. It is believed to be within the ability of those skilled in the art to provide the details for items such as the centering spring assembly 35.

Similarly, disposed within the sensor assembly 29 is a torsion spring or some other form of centering spring arrangement (not shown herein), tending to bias the sensor assembly 29 toward its neutral position, relative to the axis of rotation A2. By way of example only, when the centering spring within the sensor assembly 29 has returned the sensor assembly 29 to its neutral position, the handle member 33 is oriented in a substantially vertical position, in this embodiment. However, those skilled in the art will understand that the control assembly of this embodiment could be oriented such that the axis of rotation A1, instead of lying in a horizontal plane, would lie in a plane sloping downward, when moving from the left side of the vehicle toward the center of the vehicle. For certain situations, such an arrangement could be more suitable for the operator, ergonomically.

Referring still to FIGS. 1 and 2, with the vehicle operator's left hand gripping the handle member 33, if it is desired to move the vehicle in a forward direction, the operator rotates the handle member 33 in a forward direction. The result of this sort of manual input is that the entire assembly of the handle member 33, the connector member 31, the sensor assembly 29, and the connector member 25, remain in a fixed position relative to each other, and the entire assembly pivots about the axis of rotation A1 defined by the F-R shaft 19. In other words, the pivot point of the handle member 33 (i.e., the point about which the handle 33 pivots) is the axis A1 which, as may best be seen in FIG. 1, would preferably pass through the operator's arm at approximately the wrist joint, i.e., the pivot point for the handle member 33 coincides with the normal pivot point of the operator's hand.

When the vehicle operator desires to steer the vehicle by changing the speed of the left hand HST, relative to the right hand HST, the operator merely rotates the handle member 33 in a direction corresponding to the desired turn. For example, in order to steer the vehicle in a leftward direction, the vehicle operator would rotate the handle member 33 such that the top of the handle member would move toward the mounting bracket 11, and the connector member 31 would move toward the operator. In accordance with an important aspect of the present invention, the steering of the vehicle is accomplished by rotating the handle member 33 about the axis of rotation A2, i.e., about the L-R axis which, because it is substantially aligned with an axis (A, see FIG. 3) of the operator's arm, does not require any lateral movement of the operator's arm, but instead, only that movement required to rotate the handle member 33 about the L-R axis A2.

Referring still primarily to FIGS. 1 and 2, it may be seen that one of the main advantages of the present invention is that, with the left hand of the vehicle operator holding the handle assembly 33, the first pivot axis A1 would intersect the arm of the operator at approximately the wrist joint while the second pivot axis A2 would be generally aligned with (coincide with) the axis A of the operator's arm, as described previously. With the pivot axis A1 passing approximately though the operator's wrist joint, movement of the vehicle tending to move the operator forward or backward within the cab, will result in little, if any, undesired input from the operator to the handle assembly 29. Similarly, with the second pivot axis A2 being generally coincident with the operator's arm, movement of the vehicle tending to move the operator side-to-side within the cab will also result in little, if any, undesired input from the operator to the handle assembly 29.

Referring now primarily to FIGS. 3 and 4, there is illustrated an alternative embodiment of the present invention, in which the various elements will bear reference numerals in excess of "40". In a manner similar to the embodiment of FIGS. 1 and 2, the embodiment of FIGS. 3 and 4 includes a mounting bracket 41 and attached thereto is a forward-reverse sensor 43. Extending out of the sensor 43 is a forward-reverse shaft 45 (best seen in FIG. 4) which extends into a cylindrical joint member 47. As in the first embodiment, the F-R shaft 45 defines an axis of rotation A1. Disposed about the F-R shaft 45 is a torsion-type forward-reverse centering spring 49, having its opposite ends in engagement with a pin 51.

Extending from a forward portion of the joint member 47 is a tubular connector member 53 including a forward, vertically-oriented end portion 55 which extends upwardly in FIGS. 3 and 4 into the interior of a handle member 57. As may best be seen in FIG. 3, the handle member 57 may have an outer configuration substantially identical to that of the handle member 33 of the first embodiment, although, as would be apparent from FIG. 4, the interior of the handle member 57 would differ from that of a handle member 33.

As may best be seen in FIG. 4, the point of connection of the vertically-oriented portion 55 to the handle member 57 is such that the handle member 57 pivots relative to the portion 55, about an axis of rotation A2, which has also been referred to as the left-right (L-R) axis, through an angle which corresponds to that shown by means of the arrows in FIG. 4.

In the same manner as for the first embodiment, when the vehicle operator grasps the handle member 57, the axis of rotation A1 passes through the operator's arm at approximately the wrist joint, such that the operator can move the vehicle in either a forward direction or a reverse direction by merely rotating the handle member 57 in a forward direction (about the pivot axis A1) or in a reverse direction, respectively. In accordance with an important aspect of the invention, and as may best be seen in FIG. 4, with the operator's hand gripping the handle member 57 in the normal manner, the axis of rotation A1 would either intersect the axis A of the operator's arm, or would be disposed just slightly above or below the axis A, as will be discussed further, subsequently. In regard to movement of the vehicle in forward and reverse directions, the primary difference in the embodiment of FIGS. 3 and 4 (as compared to the embodiment of FIGS. 1 and 2) is that the connector member 53 is substantially shorter than the connector member 25 of the first embodiment, but otherwise, the operation of the handle member 57, to achieve either forward or reverse direction of operation of the vehicle, is substantially the same as in the first embodiment.

In the embodiment of FIGS. 3 and 4, turning the vehicle is again achieved by rotating the handle member 57 about the L-R axis A2, as was the case in the first embodiment. However, in the embodiment of FIGS. 3 and 4, rather than having a separate, axially-extending sensor and centering spring assembly, external to the handle member, the required sensor and centering spring are disposed within the handle member 57, in operative association with the vertically-oriented portion 55. It is believed to be within the ability of those skilled in the art to provide the required sensor and centering spring, whereby, pivotal movement of the handle member 57 about the axis A2 will result in a signal, the polarity of which will indicate the direction of movement of the handle member 57 (left or right turn), and the magnitude of which will indicate the extent of movement of the handle member 57.

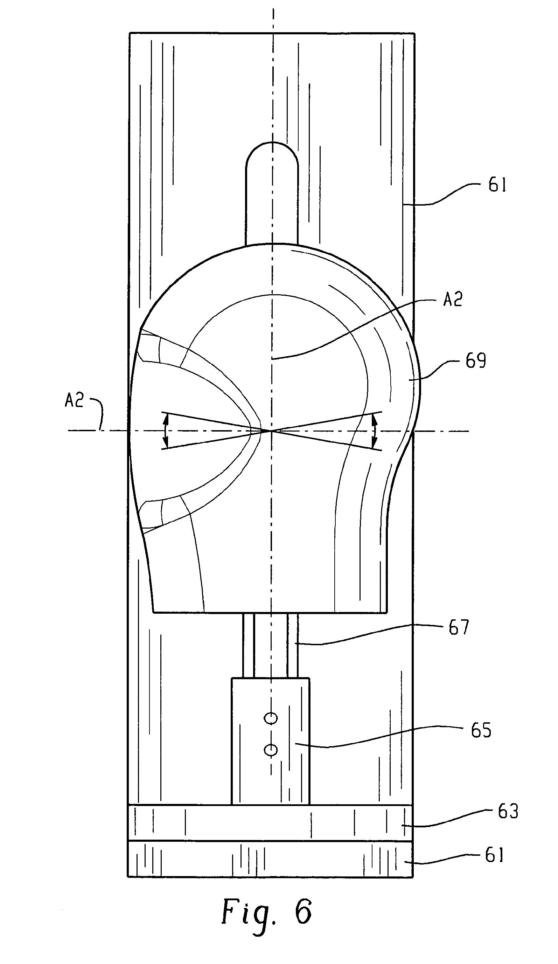

Referring now primarily to FIGS. 5, 6, and 7, a further embodiment of the present invention will be described. In the embodiment of FIGS. 5 through 7, the elements will bear reference numerals in excess of "60". Thus, this embodiment includes a mounting bracket 61, shown herein (see FIG. 5) as a right-angle bracket, and mounted thereon is a support member 63. Extending upward in FIG. 5 from the support member 63, and rigidly attached thereto, is a generally cylindrical connector member 65, supporting a smaller diameter portion 67 which extends upwardly (see FIG. 6) into an interior chamber defined by a handle member 69.

As may be seen by comparing this third embodiment with the two previous embodiments, the handle member 69 is configured to be substantially different than the handle members 33 and 57, which are oriented generally vertically. The handle member 69 has a generally horizontal orientation, as may best be seen in FIG. 5, and cooperates with the upper end of the smaller diameter portion 67 to define the first pivot axis A1 (the forward-reverse axis). The control assembly may be used to command forward or reverse movement of the vehicle simply by the operator rotating the handle member 69 in either a forward direction or a reverse direction, about the F-R axis (A1), respectively. It should be noted that in the embodiment of FIGS. 5 through 7, the first pivot axis A1 would not pass through the operator's wrist joint, but instead would be disposed somewhat forward of the operator's wrist joint, and would be surrounded by the operator's hand.

Similarly, the handle member 69 cooperates with the upper end of the portion 67 to define the second pivot axis A2 (the left-right axis). Thus, the control assembly may be used to command left or right turning of the vehicle simply by the operator turning the handle member 69 in either a left turn or in a right turn, about the L-R axis A2. However, one benefit of the embodiment of FIGS. 5 through 7 is that the second pivot axis A2 may either generally coincide with the axis A of the operator's arm, as in the previous embodiments, or be oriented vertically, both of which are shown in FIGS. 5 and 6. Thus, based upon the vehicle manufacturer's preference, the A2 axis may be horizontal, in which case steering is accomplished as previously described, or may be vertical, in which case steering is accomplished by rotating the handle member 69 about the vertical A2 axis.

It should be understood by those skilled in the art that various features of the three embodiments described so far could be combined in different ways than illustrated and described herein. For example, although the embodiment of FIGS. 5-7 uses a handle member oriented generally horizontally, the arrangement of that embodiment could also utilize a vertically oriented handle member (as in the previous embodiments), wherein the steering is accomplished by rotating the handle member about a vertical A2 axis. Various other combinations of features shown thus far may occur to those skilled in the art, and it is intended to include all such versions and combinations within the present invention, to the extent that such are within the scope of the appended claims.

During the course of designing the various embodiments of the present invention, it has become recognized that one key aspect of the invention is the fact that the amplitude of any unintended inputs to the handle member is directly proportional to the distance (typically, vertical separation) between the axis A of the operator's arm and the particular pivot axis. Therefore, by way of example, if the axis A of the operator's arm intersects the pivot axis A1 (i.e., the vertical separation is zero), the unintended input (affecting forward or rearward movement of the vehicle) should be substantially zero. Similarly, if the axis A of the operator's arm coincides with the pivot axis A2 (i.e., the separation, either vertical or transverse, is zero), the unintended input (affecting left or right movement of the vehicle) should be substantially zero. Thus, within the scope of the invention, there can be some separation between the axis A of the operator's arm and the particular pivot axis, it being understood that, to the extent that the "undesirable" separation increases, that much less than full benefit of the present invention is thereby achieved.

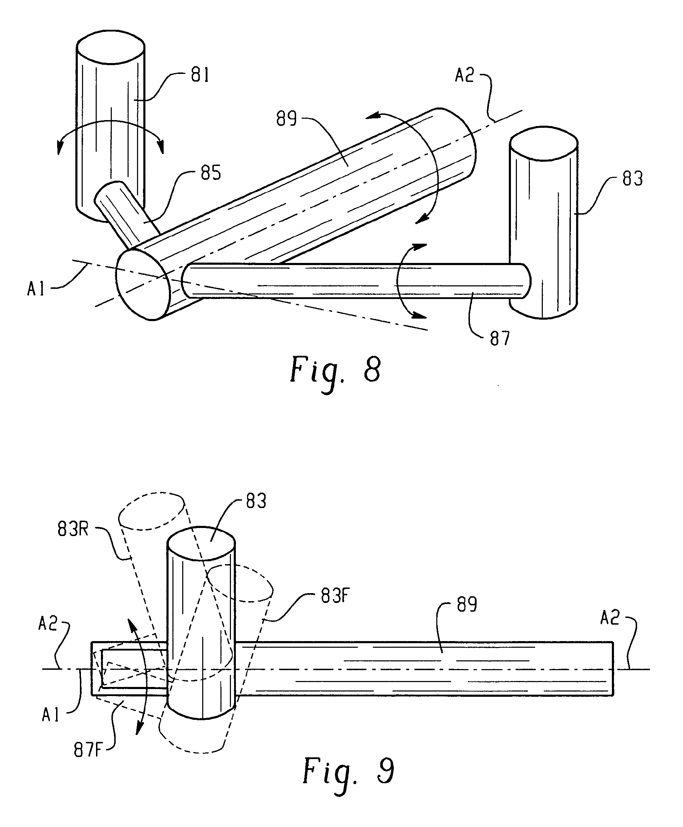

Referring now primarily to FIGS. 8 and 9, there is one final embodiment of the invention to be shown herein and which takes advantage of the principles described above. In the embodiment of FIGS. 8 and 9, the elements will bear reference numerals in excess of "80", such that there is a pair of handle members 81 and 83, to be gripped by the left and right hands, respectively, of the vehicle operator. For ease of illustration, the handle members 81 and 83 are shown as being attached by means of a pair of connector members 85 and 87, respectively, to a central support member 89, which is rotatable about its longitudinal axis. In accordance with one important aspect of this embodiment, the longitudinal axis of the support member 89 coincides with the pivot axis A2 (the L-R axis). Therefore, steering is accomplished by moving the handle members 81 and 83 somewhat in the manner of a steering wheel, such that the degree of steering of the vehicle will correspond to the angle of rotation of the support member 89 about the pivot axis A2. It should be noted that the pivot axis A2 in FIGS. 8 and 9 can also be taken to represent, and indicate the orientation of, what will be referred to hereinafter, in the appended claims as an "axis of the vehicle", because the pivot axis A2 in FIGS. 8 and 9, unlike in the previous embodiments, would be more likely to be disposed at the center of the vehicle, i.e., about equidistant from the left and right sides thereof.

In order to effect forward or rearward movement of the vehicle, the operator merely moves both handle members 81 and 83 in unison from the neutral position (represented by "83" in FIG. 9), pivoting the assembly of the handle members 81 and 83 and the connector members 85 and 87 relative to the pivot axis A1. For forward movement, the assembly is pivoted to a forward position (represented by "83F" and "87F" in FIG. 9), and for rearward movement, the assembly would be pivoted to a rearward position (represented by "83R" in FIG. 9). In either case, it may be seen that the pivot axis A1 would still intersect the arms of the vehicle operator, thus minimizing the vertical separation between the axis A of the arms and the pivot axis A1, to minimize unintended input motion to the handle member 81 and 83.

The invention has been described in great detail in the foregoing specification, and it is believed that various alterations and modifications of the invention will become apparent to those skilled in the art from a reading and understanding of the specification. It is intended that all such alterations and modifications are included in the invention, insofar as they come within the scope of the appended claims.

## Claims

1. A control assembly adapted for use on a vehicle to be controlled in response to variations in first and second control signals, said control assembly comprising a stationary mounting member (11;41;61) and a handle (33;57;69) adapted to be held in the hand of a vehicle operator, said handle being moveable in forward and reverse directions to generate said first control signal, and being moveable in left and right directions to generate said second control signal; **characterized by**:
(a) said handle (33;57;69) defining an upper end, a lower end, and a pivot location (A2) disposed within said handle and being generally intermediate said upper and lower ends;
(b) an elongated connector member (23,25;47,53;65) having a first portion (23;47) fixed to pivot about a first pivot axis (A1), and a second portion (31;55;67) connected to said handle (33;57;69) at said pivot location (A2);
(c) a first sensor (21 ;43) operably associated with said first portion of said connector member (23,25;47,53) and said first pivot axis (A1), and said connection of said second portion (31;55;67) of said connector member and said pivot location (A2) of said handle (33;57;69) being such that movement of said handle in said forward and reverse directions results in said handle and said connector member (23,25;47,53;65,67) moving as a unit, said first portion of said connector member pivoting about said first pivot axis (A1) and said first sensor (21;43) generating said first control signal; and
(d) a second sensor (29) operably associated with said second portion (31;55;67) of said connector member (23,25;47,53;65) and said pivot location (A2), and said connection of said second portion of said connector member and said pivot location (A2) of
said handle being such that movement of said handle in left and right directions results in said handle pivoting about said second portion of said connector member and said second sensor (29) generating said second control signal.

2. A control assembly as claimed in claim 1, **characterized by** said connector member (23,25;47,53;65) being configured whereby, when said handle (33;57;69) is held in a normal manner in the hand of a vehicle operator, said first pivot axis (A1) is oriented generally perpendicular to the arm of the vehicle operator.

3. A control assembly as claimed in claim 2, **characterized by** said connector member (23,25;47,53;65) being configured whereby said first pivot axis (A1) intersects the arm of the vehicle operator at approximately the wrist joint.

4. A control assembly as claimed in claim 1, **characterized by** said handle (57;69) defining an interior recess extending from at least said pivot location to said lower end of said handle, and said second portion (55;67) of said connector member extending upwardly through said interior recess to said pivot location (A2).

5. A control assembly adapted for use on a vehicle to be controlled in response to variations in first and second control signals, said control assembly comprising a stationary mounting member (11,41;61) and a handle (33;57;69) adapted to be held in the hand of a vehicle operator, said handle being moveable in forward and reverse directions to generate said first control signal and being moveable in left and right directions to generate said second control signal; **characterized by**:
(a) said control assembly further comprising an elongated connector member (23,25;47,53;65) which by itself, or in cooperative association with one of said stationary mounting member (11,41;61) and said handle (33;57;69), defines a first pivot axis (A1), whereby, when said handle is held in a normal manner in the hand of a vehicle operator, said first pivot axis (A1) is oriented generally perpendicular to the arm of the vehicle operator, and approximately intersects one of the hand and the arm of the vehicle operator.

6. A control assembly as claimed in claim 5, **characterized by** said elongated connector member (23,25;47,53;65) cooperates with said handle (33;57;69) to define a second pivot axis (A2), oriented generally perpendicular to said first pivot axis (A1), whereby, when said handle is held in said normal manner in the hand of said vehicle operator, said second pivot axis (A2) generally coincides with the arm of the vehicle operator.

7. A control assembly as claimed in claim 5, **characterized by** said elongated connector member (23,25;47,53;65) cooperating with said stationary mounting member (11,41) to define said first pivot axis (A1), whereby, when the vehicle operator moves said handle (33;57) in said forward and reverse directions, said handle and said connector member move in unison, pivoting about said first pivot axis (A1).

8. A control assembly as claimed in claim 6, **characterized by** said connector member (23,25;47,53) and said handle (33;57) cooperating to define a pivot location (A2) disposed within said handle, said handle including an upper end and a lower end, and said pivot location (A2) being disposed generally intermediate said upper and lower ends.

9. A control assembly as claimed in claim 5, **characterized by** a first sensor (21;43) operably associated with said elongated connector member (23,25;47,53) and said first pivot axis (A1), such that movement of said handle in said forward and reverse directions results in said first sensor (21;43) generating said first control signal.

10. A control assembly as claimed in claim 8, **characterized by** a second sensor (29) operably associated with said connector member (23,25;47,53) and said pivot location (A2), such that movement of said handle in left and right directions results in said second sensor (29) generating said second control signal.

11. A control assembly adapted for use on a vehicle to be controlled in response to variations in first and second control signals, said control assembly comprising a handle member (33;57;69;81,83) adapted to be held in the hand of a vehicle operator, the arm of the vehicle operator defining an axis (A), said handle member being moveable in forward and reverse directions to generate said first control signal, and being moveable in left and right directions to generate said second control signal; **characterized by**:
(a) said handle member (33;57;69;81,83) being mounted on a connector member (23;53;65;85,87) and moveable in forward and reverse directions about a first pivot axis (A1), and being moveable in left and right directions about a second pivot axis (A2);
(b) said handle member (33;57;69;81,83) and said connector member (23;53;65;85,87) being configured such that said first pivot axis (A1) substantially intersects said axis (A) of the arm of the vehicle operator, to minimize unintended inputs to said handle member in said forward and reverse directions;
(c) said handle member (33;57;69;81,83) and said connector member (23;53;65;85,87) being configured such that said second pivot axis (A2) is oriented substantially parallel to said axis (A) of the arm of the vehicle operator, to minimize unintended inputs to said handle

12. A control assembly as claimed in claim 11, **characterized by** said handle member (33;57;69) and said connector member (23;53;65) being configured such that said second pivot axis (A2) is oriented substantially coincidental with said axis (A) of the arm of the vehicle operator.

13. A control assembly as claimed in claim 11, **characterized by** said control assembly including a pair of handle members (81,83) substantially equally and oppositely disposed about said second pivot axis (A2), and further including said connector member comprising a pair of connector members (85,87) equally and oppositely disposed about said second pivot axis (A2).

14. A control assembly as claimed in claim 13, **characterized by** said control assembly further including a central support member (89) rotatable about an axis being substantially coincidental with said second pivot axis (A2), each of said connector members (85,87) having an outer end fixed to its respective handle member (81,83), and an inner end operably associated with said central support member (89).

15. A control assembly adapted for use on a vehicle to be controlled in response to variations in first and second control signals, said control assembly comprising a handle member (33;57;69;81,83) adapted to be held in the hand of a vehicle operator, the arm of the vehicle operator defining an axis (A), said handle member being moveable in forward and reverse directions to generate said first control signal, and being moveable in left and right directions to generate said second control signal; **characterized by**:
(a) said handle member (33;57;69;81,83) being pivotable in forward and reverse directions about a forward-reverse axis (A1) from a neutral position, said forward-reverse axis (A1) being oriented generally perpendicular to an axis of the vehicle;
(b) said forward-reverse axis (A1) being disposed such that, when the vehicle operator's hand is in a normal gripping relationship to said handle member (33;57;69;81,83), said forward-reverse axis (A1) passes through the hand of the vehicle operator at approximately the wrist joint;
(c) a first sensor (21 ;43) operably associated with one of said handle member (33;57;69;81,83) and said forward-reverse axis (A1) to provide a first output representative of the pivotable movement of said handle member about said forward-reverse axis, from said neutral position;
(d) said handle member (33;57;69;81,83) being moveable in left and right directions about a left-right axis (A2), from a neutral position, said left-right axis being oriented generally parallel to the axis of the vehicle; and
(e) a second sensor (29) operably associated with one of said handle member and said left-right axis (A2) to provide a second output representative of the movement of said handle member, about said left-right axis, from said neutral position.
